# FASCICULE DE BREVET EUROPEEN

(11) **EP 1 718 931 B1**
(45) Date de publication et mention de la délivrance du brevet: **09.05.2012**
(21) Numéro de dépôt: 05716740.5
(22) Date de dépôt: 18.02.2005
(51) Int. Cl.: G01C 23/00, B64F 1/00

(54) **DISPOSITIF OPTOELECTRONIQUE SECURISE D"AIDE AU ROULAGE POUR AERONEF**
SICHERE OPTOELEKTRONISCHE TAXI-HILFSEINRICHTUNG FÜR FLUGZEUGE
SECURE OPTOELECTRONIC TAXI-ASSISTANCE DEVICE FOR AIRCRAFT

(30) Priorité: 27.02.2004 FR 0402034
(43) Date de publication de la demande: 08.11.2006
(73) Titulaire: THALES, 92200 Neuilly sur Seine (FR)
(72) Inventeur: DUBOURG, Bernard Thales Intellectual Property, F-94117 Arcueil Cedex (FR)
(74) Mandataire: Bréda, Jean-Marc
(86) Numéro de dépôt international: PCT/EP2005/050723
(87) Numéro de publication internationale: WO 2005/093374

(56) Documents cités:
- WO-A-99/04304
- US-A- 5 745 863
- US-A1- 2003 102 987
- US-B1- 6 411 890

## Description

Le domaine de l'invention est celui des dispositifs optoélectroniques d'aide au roulage pour aéronef, comportant un collimateur dit Tête Haute permettant la présentation d'informations dans le champ visuel du pilote. Elle s'applique notamment aux aéronefs civils de grande taille de type Boeing 747 ou Airbus A380.

Il est important que les phases de roulage au sol des aéronefs dans un aéroport puissent se faire en toute sécurité quelques soient la densité du trafic aérien ou les conditions de visibilité.

Sur les aéronefs modernes, pour assurer la fonction de navigation aéroportuaire, il existe deux types de systèmes d'aide à la navigation. Ce sont:
- un système d'aide à la navigation comprenant notamment une visualisation de planche de bord dite Tête Basse présentant une carte électronique de l'aéroport, de la position de l'aéronef dans l'aéroport et de la trajectoire à suivre et comportant une gestion des autorisations de roulage ;
- un système d'aide au roulage comprenant notamment un collimateur Tête Haute présentant en superposition sur le paysage extérieur une symbologie donnant des informations sur la trajectoire à suivre et un certains nombre de consignes, ladite symbologie étant générée par un calculateur dédié au collimateur.

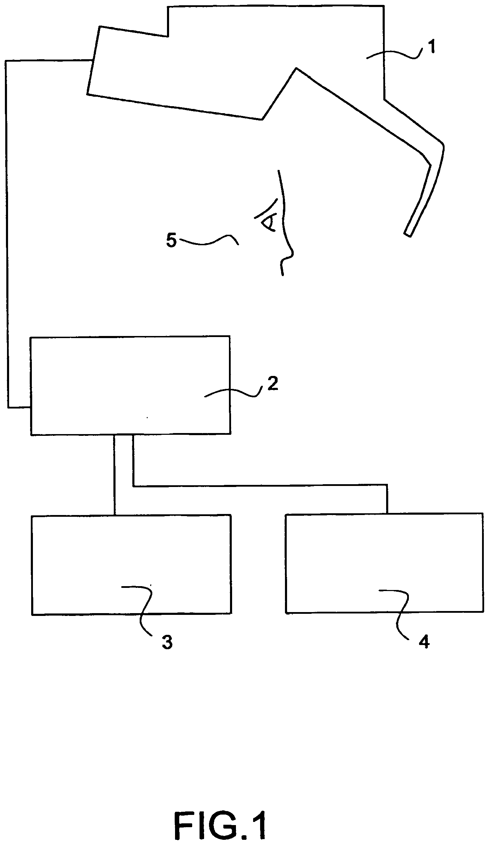

Dans le cas du système d'aide au roulage, les informations sont fournies au calculateur 2 du collimateur 1, comme il est montré sur la figure 1 :
- par le système principal de navigation 3, notamment pour les informations de cap, de vitesse au sol et de position ;
- par le calculateur 4 dédié à la fonction de navigation aéroportuaire, notamment pour les informations liées à la trajectoire à suivre, aux points d'arrêt, aux changements de voie de circulation, à la distance à parcourir ou à la largeur de la voie de circulation.

Le calculateur regroupe les fonctions de calcul spécifiques à partir des informations qui lui sont fournies et génère la symbologie nécessaire au collimateur.

Un collimateur Tête Haute comprend une source d'images, une optique de collimation et un combineur optique placé dans le champ visuel du pilote 5, le collimateur donne ainsi une image virtuelle à l'infini de la symbologie superposée au paysage extérieur.

Classiquement, on sépare les symboles affichés dans un collimateur Tête Haute en deux grandes catégories :
- Les symboles dits 2D qui fournissent au pilote des informations de navigation qui sont, par exemple :
   - la ligne d'horizon ;
   - le temps estimé ou la distance de l'aéronef jusqu'au point final de cheminement ;
   - Le changement de direction à effectuer,
   - la vitesse sol de l'aéronef ;
   - le cap magnétique ;
- les symboles dits 3D qui donnent une meilleure perception de l'environnement de l'aéronef. Ces symboles sont particulièrement utiles en cas de visibilité dégradée, par exemple pour la navigation de nuit ou par mauvaises conditions météorologiques. Ce sont essentiellement des symboles représentant la voie de circulation. L'image virtuelle de cette symbologie fournie par le collimateur se superpose exactement à la position réelle de la voie de circulation, la position de l'aéronef par rapport à la voie de circulation étant parfaitement connue au moyen des systèmes de navigation.

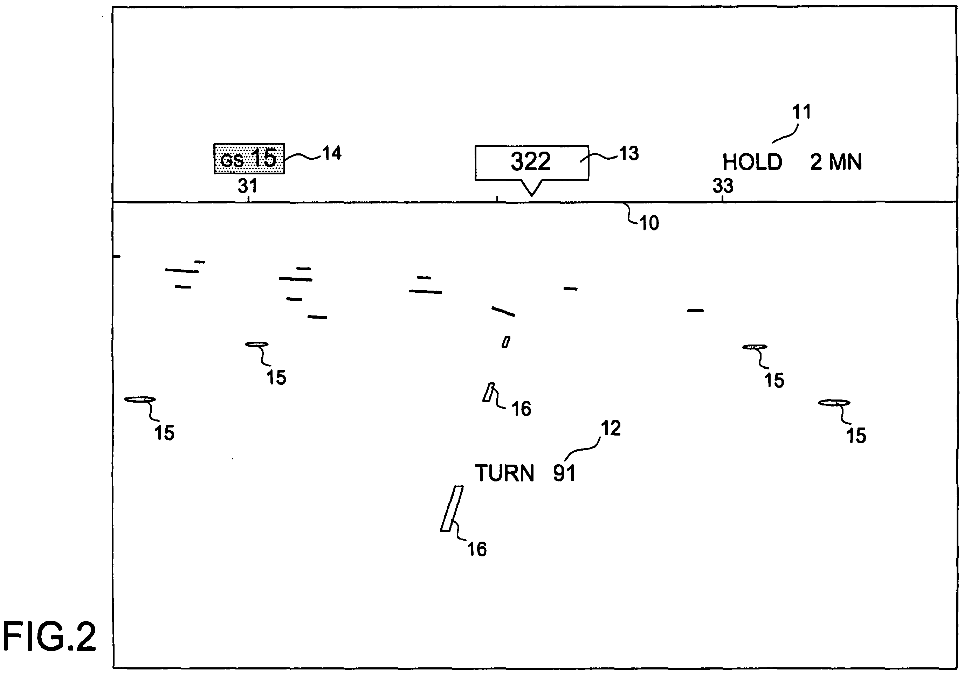

A titre d'exemple non limitatif, la figure 2 représente une symbologie de ce type telle qu'elle est présentée au pilote à travers le collimateur. Elle comprend :
- la ligne d'horizon 10 graduée en cap magnétique (valeurs 31 et 33 sur la figure, représentant la valeur du cap en dizaines de degrés) ;
- le temps estimé ou la distance de l'aéronef jusqu'au point final de cheminement 11 symbolisé par le texte HOLD suivi d'un nombre de minutes indiquant au pilote le nombre de minutes restant jusqu'au point final de cheminement (2 minutes sur la figure 2). L'indication en temps peut être remplacée par une indication de distance généralement exprimée en mètres ;
- le changement de direction 12 symbolisé par le texte TURN suivi de l'indication du nombre de mètres à parcourir avant le prochain virage de l'aéronef (91 mètres sur la figure 2);
- l'indication de cap magnétique 13 symbolisé par la valeur du cap magnétique entouré d'un rectangle terminé par une pointe en V disposée sur la ligne d'horizon 10 (valeur du cap sur la figure 2 : 322 degrés);
- la vitesse sol 14 symbolisée par le texte GS suivi de la valeur de la vitesse exprimée en noeuds, GS étant l'acronyme anglosaxon de « Ground Speed » signifiant vitesse au sol. Lorsque la vitesse est excessive (cas de la figure 2), le symbole est tracé en inverse vidéo (en blanc sur fond noir sur la figure 2) ;
- les symboles correspondant à la voie de circulation, leur image à travers le collimateur se superposant parfaitement avec la voie de circulation réelle. Ces symboles comprennent :
   o des plots 15 disposés à intervalle régulier et symbolisant les limites droite et gauche de la voie de circulation. Sur la figure 2, ces plots sont circulaires mais apparaissent, bien entendu, elliptiques sous l'effet de la perspective, leur taille décroissant avec leur distance à l'aéronef ;
   o des rectangles 16 disposés à intervalle régulier et symbolisant le milieu de la voie de circulation. Bien entendu, ces rectangles sont également représentés en perspective, leur orientation et leur taille dépendant de leur position par rapport à l'aéronef.

L'inconvénient principal de ce type de symbologie est que les informations fournies ne présentent pas de symbologies spécifiques destinées à sécuriser le roulage de l'aéronef sur les voies de circulation. Ce problème est particulièrement sensible pour les avions civils de grande capacité qui, ayant des dimensions importantes, doivent être manoeuvrés avec une plus grande précision que des avions de plus petite taille. L'emplacement du pilote, placé très au dessus du sol, nécessite également des symbologies adaptées. Ainsi, sur un airbus A380, le pilote est placé à plus de sept mètres au-dessus du sol.

L'objet de l'invention est de proposer des symbologies sécurisées permettant d'améliorer sensiblement la sécurité et la manoeuvrabilité des aéronefs pendant la phase de roulage.

Plus précisément, l'invention a pour objet un dispositif optoélectronique d'aide au roulage pour aéronef dans un aéroport, ledit dispositif comprenant au moins :
- un collimateur;
- Un calculateur dédié audit collimateur ;
caractérisé en ce que ledit calculateur comporte des moyens d'affichage sur le collimateur de symboles de sécurité concernant ou la position de l'aéronef sur les voies de circulation de l'aéroport ou la manoeuvre à effectuer par l'aéronef sur lesdites voies de circulation.

Avantageusement, en cas de virage de l'aéronef, les symboles de sécurité comportent une flèche de taille variable, la longueur de la flèche étant maximale à l'entrée du virage et nulle à la sortie du virage. Les symboles de sécurité comportent également de part et d'autre de la flèche, une première indication relative à la voie de circulation sur laquelle se trouve l'aéronef avant le virage et une seconde indication relative à la voie de circulation située à la sortie du virage.

Avantageusement, les symboles de sécurité comportent un premier symbole représentatif de la largeur de la voie de circulation et un second symbole représentatif de la largeur du train d'atterrissage principal, les largeurs du premier symbole et du second symbole étant représentées à la même échelle, la position du second symbole par rapport au premier symbole étant représentative de la position réelle du train sur la voie de circulation. Avantageusement, le premier symbole est un rectangle comportant une barre centrale symbolisant l'axe de la voie de circulation et le second symbole est composé de deux formes oblongues. Avantageusement, les symboles de sécurité comportent également de part et d'autre du premier symbole deux symboles d'alarme qui deviennent clignotants lorsque le train d'atterrissage est très proche du bord de la voie de circulation, le second symbole de sécurité devenant également clignotant dans cette situation.

Avantageusement, les symboles de sécurité comportent une barrière d'arrêt, ladite barrière d'arrêt occupant une position virtuelle précise et constante sur une voie de circulation de l'aéroport. La barrière d'arrêt comporte au moins un pied surmonté d'une grille composée de barreaux inclinés et parallèles compris entre deux barres horizontales. Avantageusement, les symboles de sécurité comportent également au moins une première signalétique d'arrêt et une indication de la distance séparant l'aéronef de la position virtuelle de la barrière d'arrêt. Avantageusement, les symboles de sécurité comportent également au moins une première et une seconde signalétique d'arrêt clignotantes lorsque la distance séparant l'aéronef de la position virtuelle de la barrière d'arrêt est inférieure à une valeur de consigne, les signalétiques d'arrêt sont, par exemple, le mot STOP et peuvent être écrites en inverse vidéo.

L'invention, sera mieux comprise et d'autres avantages apparaîtront à la lecture de la description qui va suivre donnée à titre non limitatif et grâce aux figures annexées parmi lesquelles :
- la figure 1 représente le synoptique général d'un dispositif optoélectronique d'aide au roulage pour aéronef ;
- la figure 2 représente une symbologie d'aide au roulage selon l'art antérieur ;
- la figure 3 représente une symbologie d'aide au roulage comprenant des symboles selon l'invention dédiés aux manoeuvres de virage ;
- la figure 4 représente une symbologie d'aide au roulage comprenant des symboles selon l'invention dédiés à la position de l'aéronef sur la piste ;
- la figure 5 représente une symbologie d'aide au roulage comprenant des symboles selon l'invention dédiés à stopper l'aéronef à un point d'arrêt donné ;
- la figure 6 représente la même symbologie que la figure 5 dans le cas où l'aéronef est proche du point d'arrêt.

En cas de virage de l'aéronef, il est important que le pilote connaisse parfaitement la position de l'aéronef avant, pendant et après le virage. Une première symbologie selon l'invention facilite ces différentes phases. Elle comporte une flèche de taille variable, la longueur de la flèche étant maximale à l'entrée du virage et nulle à la sortie du virage. Les symboles de sécurité comportent également de part et d'autre de la flèche, une première indication relative à la voie de circulation sur laquelle se trouve l'aéronef avant le virage et une seconde indication relative à la voie de circulation située à la sortie du virage.

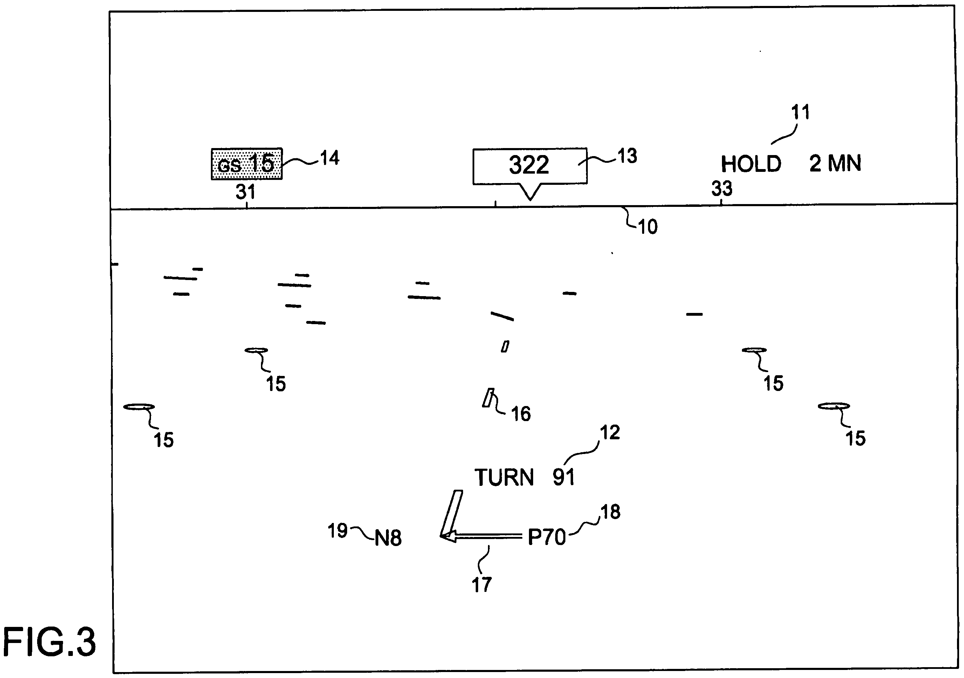

A titre d'exemple, la figure 3 illustre ce type de symbologie. Elle comprend tous les symboles de la figure 2 auxquels ont été ajoutés les symboles spécifiques 17, 18 et 19 selon l'invention.

Le symbole 17 est une flèche. Sa direction correspond au sens du virage et sa taille correspond à la position de l'aéronef dans le virage. Dans le cas de la figure, l'aéronef va aborder le virage, la taille de la flèche est maximale.

Les symboles 18 et 19 représentent d'une part la voie de circulation encore appelée « taxiway » en terminologie anglo-saxonne sur laquelle se trouve l'aéronef, dans le cas de la figure 3, le « taxiway » P70 et d'autre part, la voie de circulation sur laquelle l'aéronef se trouvera après avoir effectué son virage, dans le cas de la figure 3, le « taxiway » N8.

Au fur et à mesure que l'aéronef progresse dans le virage, la taille de la flèche diminue jusqu'à disparaître totalement à la sortie du virage. Dans ce cas, seule reste affichée l'indication de voie de circulation sur laquelle se trouve désormais l'aéronef.

Une seconde symbologie selon l'invention permet de sécuriser la position de l'aéronef sur la voie de circulation et en particulier la position du train d'atterrissage. En effet, les avions de grande capacité ont des trains d'atterrissage très larges qui peuvent avoisiner la largeur de la voie de circulation. Il est donc essentiel de maîtriser parfaitement la position de l'aéronef sur la voie de circulation de façon à éviter toute sortie de piste. Cette symbologie comprend :
- un premier symbole représentatif de la largeur de la voie de circulation,
- un second symbole représentatif de la largeur du train d'atterrissage principal,

Les largeurs du premier symbole et du second symbole étant représentées à la même échelle, la position du second symbole par rapport au premier symbole étant représentative de la position réelle du train sur la voie de circulation. Avantageusement, le premier symbole est un rectangle comportant une barre centrale symbolisant l'axe de la voie de circulation et le second symbole est composé de deux formes oblongues symbolisant des roues. Avantageusement, les symboles de sécurité comportent également de part et d'autre du premier symbole, deux symboles d'alarme qui deviennent clignotants lorsque le train d'atterrissage est très proche du bord de la voie de circulation.

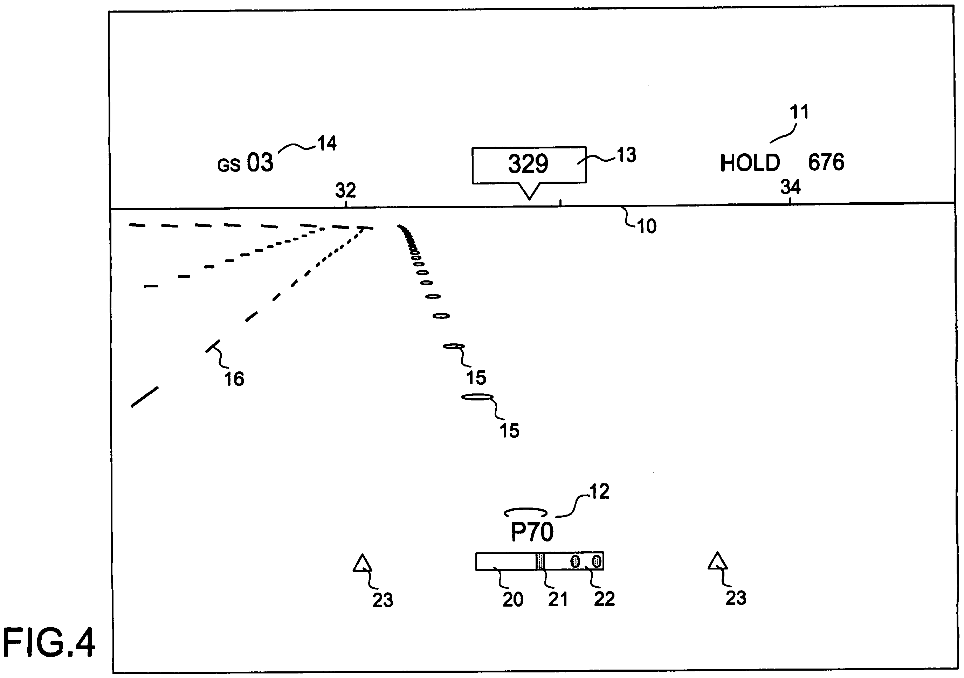

A titre d'exemple, la figure 4 illustre cette symbologie. Elle comprend certains symboles des figures 2 et 3 auxquels ont été ajoutés les symboles spécifiques selon l'invention. Ainsi, sont figurés la ligne d'horizon 10 graduée en cap magnétique (valeurs 32 et 34 sur la figure 4) ; la distance estimée de l'aéronef jusqu'au point final de cheminement 11 symbolisé par le texte HOLD 676 indiquant que l'aéronef est encore à 676 mètres du point final , l'indication de voie de circulation 12 indiquant que l'aéronef est sur la voie de circulation P70 ; l'indication de cap magnétique 13 (valeur du cap sur la figure 4 : 329 degrés) ; la vitesse sol 14 symbolisée par le texte GS 03 ; les symboles correspondant à la voie de circulation qui sont les plots 15 et les rectangles 16 centraux disposés à intervalle régulier et symbolisant le milieu de la voie de circulation.

Les symboles spécifiques sont :
- un rectangle 20 comportant une barre centrale 21 symbolisant l'axe de la voie de circulation ;
- un symbole 22 composé de deux formes oblongues symbolisant le train d'atterrissage ;
- deux symboles d'alarme 23 triangulaires disposés de part et d'autre du symbole 20.

Dans le cas de la figure 4, le train d'atterrissage est trop proche d'un des bords de la voie de circulation. Le symbole 22 est décentré par rapport au rectangle 20. Les symboles d'alarme 23 sont alors clignotants ainsi que le symbole 22.

Une troisième symbologie selon l'invention permet de sécuriser les manoeuvres d'arrêt de l'aéronef. Elle comporte :
- une barrière d'arrêt, ladite barrière d'arrêt occupant une position virtuelle précise et constante sur une voie de circulation de l'aéroport. La barrière d'arrêt comporte au moins un pied surmonté d'une grille composée de barreaux inclinés et parallèles compris entre deux barres horizontales.
- une première signalétique d'arrêt et une indication de la distance séparant l'aéronef de la position virtuelle de la barrière d'arrêt.
- une seconde signalétique d'arrêt, la première et la seconde signalétique d'arrêt étant clignotantes lorsque la distance séparant l'aéronef de la position virtuelle de la barrière d'arrêt est inférieure à une valeur de consigne. Les signalétiques d'arrêt sont, par exemple, le mot STOP et peuvent être écrites en inverse vidéo.

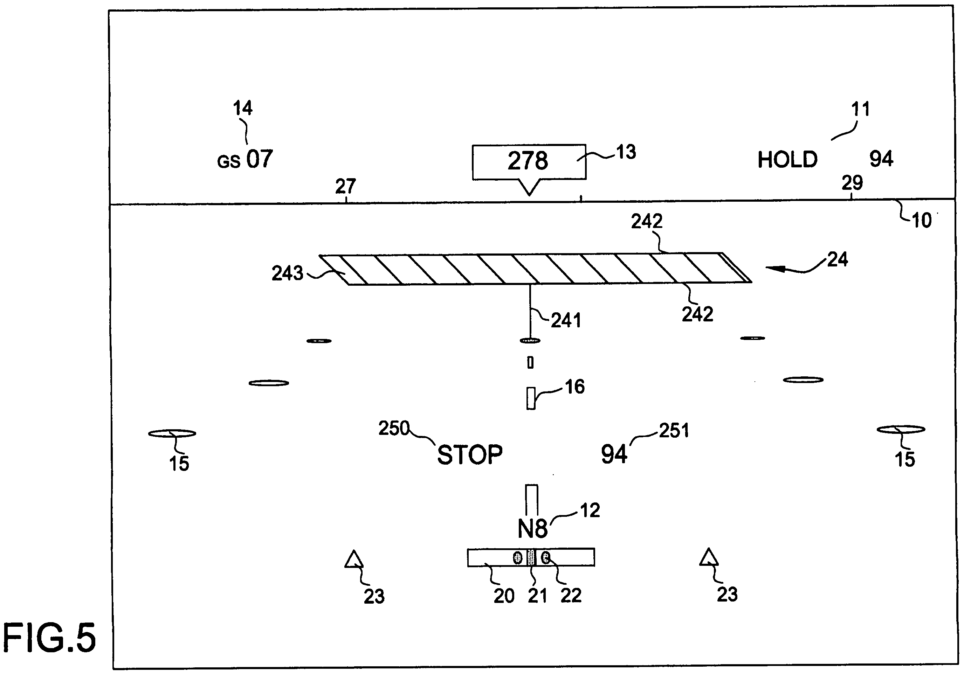

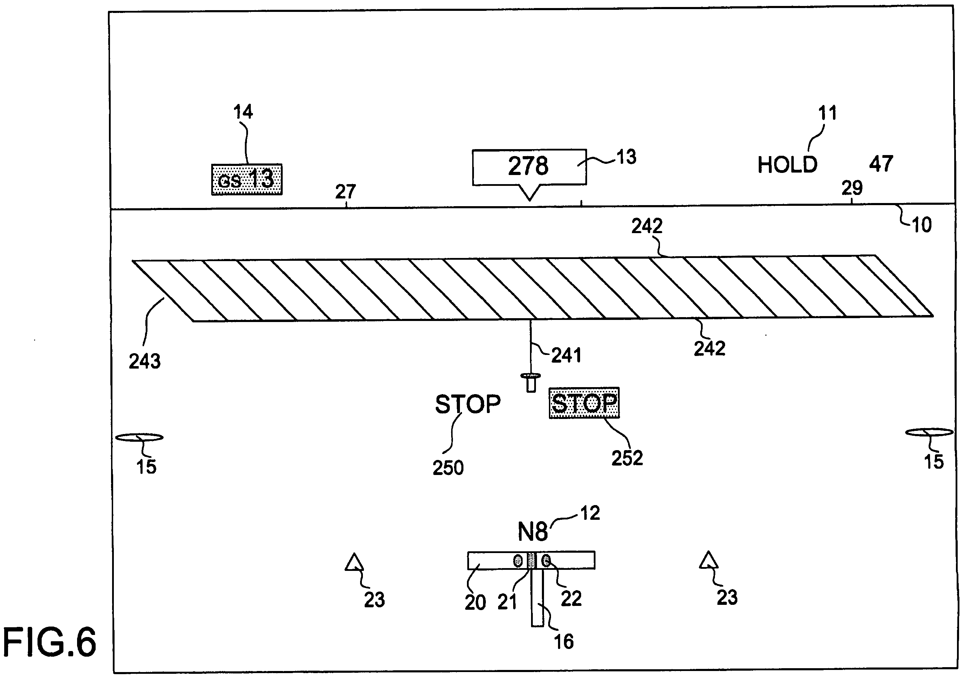

A titre d'exemple, les figure 5 et 6 illustrent cette symbologie. La figure 5 comprend certains symboles des figures précédentes auxquels ont été ajoutés les symboles spécifiques selon l'invention. Ainsi, sont figurés la ligne d'horizon 10 graduée en cap magnétique (valeurs 27 et 29 sur la figure 5) ; la distance estimée de l'aéronef jusqu'au point final de cheminement 11 symbolisé par le texte HOLD 94 indiquant que l'aéronef est encore à 94 mètres du point final ; l'indication de cap magnétique 13 (valeur du cap sur la figure 5 : 278 degrés) ; la vitesse sol 14 symbolisée par le texte GS 07 ; l'indication de voie de circulation 12 indiquant que l'aéronef est sur la voie de circulation N8 ; les symboles correspondant à la voie de circulation qui sont les plots 15 et les rectangles 16 centraux ; les symboles 20, 21, 22 et 23 représentant la position du train d'atterrissage sur la voie de circulation.

Les symboles spécifiques sont :
- la barrière d'arrêt 24 composée d'un pied central 241, d'une grille 243 composée de barreaux inclinés et de deux barres horizontales 242. La largeur de la barrière est sensiblement égale à la largeur de la voie de circulation ;
- une signalétique d'arrêt 250 comprenant le mot STOP suivi d'une indication 251 de la distance séparant l'aéronef de la position virtuelle de la barrière d'arrêt, en l'occurrence 94 mètres sur la figure 5.

L'ergonomie de cette barrière est particulièrement bien adaptée aux aéronefs de grande taille. En effet, en disposant la grille sur un pied, on amène l'image de la grille dans le champ de vision central du pilote, celui-ci étant situé à une hauteur importante au-dessus du sol.

Dans le cas de la figure 5, l'aéronef est encore à 94 mètres de la barrière et la sécurité de l'aéronef est encore assurée. La figure 6 représente une symbologie typique d'une situation où l'aéronef est très prés de la barrière. Dans ce cas, la signalétique d'arrêt change.

Sur la figure 6, sont figurés la ligne d'horizon 10 graduée en cap magnétique (valeurs 27 et 29 sur la figure 6) ; la distance estimée de l'aéronef jusqu'au point final de cheminement 11 symbolisé par le texte HOLD 47 indiquant que l'aéronef n'est plus qu'à 47 mètres de la barrière ; l'indication de cap magnétique 13 (valeur du cap sur la figure 6 : 278 degrés) ; la vitesse sol 14 symbolisée par le texte GS 13 en inverse vidéo parce que la vitesse de l'aéronef est excessive; l'indication de voie de circulation 12 indiquant que l'aéronef est sur la voie de circulation N8 ; les symboles correspondant à la voie de circulation qui sont les plots 15 et les rectangles 16 centraux ; les symboles 20, 21, 22 et 23 représentant la position du train d'atterrissage sur la voie de circulation ; les symboles 241, 242, 243 symbolisant la barrière d'arrêt La symbologie comporte également deux signalétiques d'arrêt 250 et 252 symbolisées par le mot STOP qui sont tracés en inverse vidéo et qui clignotent, indiquant au pilote qu'il doit procéder à un arrêt immédiat de l'aéronef, la distance séparant l'aéronef de la barrière n'étant plus que de 47 mètres.

## Revendications

1. Dispositif optoélectronique d'aide au roulage pour aéronef dans un aéroport, ledit dispositif comprenant au moins un collimateur (1) et un calculateur (2) dédié audit collimateur ; ledit calculateur (2) comportant des moyens d'affichage sur le collimateur (1) de symboles de sécurité concernant ou la position de l'aéronef sur les voies de circulation de l'aéroport ou la manoeuvre à effectuer par l'aéronef sur lesdites voies de circulation, **caractérisé en ce que**, en cas de virage de l'aéronef, les symboles de sécurité comportent une flèche (17) de taille variable.

2. Dispositif selon la revendication 1, **caractérisé en ce que** la longueur de la flèche (17) est maximale à l'entrée du virage et nulle à la sortie du virage.

3. Dispositif selon la revendication 1, **caractérisé en ce que**, les symboles de sécurité comportent également de part et d'autre de la flèche, une première indication (18) relative à la voie de circulation sur laquelle se trouve l'aéronef avant le virage et une seconde indication (19) relative à la voie de circulation située à la sortie du virage.

4. Dispositif selon la revendication 1, **caractérisé en ce que** les symboles de sécurité comportent un premier symbole (20) représentatif de la largeur de la voie de circulation et un second symbole (22) représentatif de la largeur du train d'atterrissage principal, les largeurs du premier symbole (20) et du second symbole (22) étant représentées à la même échelle, la position du second symbole (22) par rapport au premier symbole (20) étant représentative de la position réelle du train sur la voie de circulation.

5. Dispositif selon la revendication 4, **caractérisé en ce que** le premier symbole (20) est un rectangle comportant une barre centrale (21) symbolisant l'axe de la voie de circulation et le second symbole (22) est composé de deux formes oblongues.

6. Dispositif selon la revendication 4, **caractérisé en ce que** les symboles de sécurité comportent également de part et d'autre du premier symbole (20), deux symboles d'alarme (23) qui deviennent clignotants lorsque le train d'atterrissage est très proche du bord de la voie de circulation.

7. Dispositif selon la revendication 4, **caractérisé en ce que** le second symbole (22) de sécurité devient clignotant lorsque le train d'atterrissage est très proche du bord de la voie de circulation.

8. Dispositif selon la revendication 1, **caractérisé en ce que** les symboles de sécurité comportent une barrière d'arrêt (24), ladite barrière d'arrêt (24) occupant une position virtuelle précise et constante sur une voie de circulation de l'aéroport.

9. Dispositif selon la revendication 8, **caractérisé en ce que** la barrière d'arrêt (24) comporte au moins un pied (241) surmonté d'une grille (243) composée de barreaux inclinés et parallèles compris entre deux barres (242) horizontales.

10. Dispositif selon la revendication 8, **caractérisé en ce que** les symboles de sécurité comportent également au moins une première signalétique d'arrêt (250) et une indication de la distance (251) séparant l'aéronef de la position virtuelle de la barrière d'arrêt (24).

11. Dispositif selon la revendication 8, **caractérisé en ce que** les symboles de sécurité comportent également au moins une première et une seconde signalétique d'arrêt (250, 251) clignotantes lorsque la distance séparant l'aéronef de la position virtuelle de la barrière d'arrêt (24) est inférieure à une valeur de consigne.

12. Dispositif selon les revendications 10 ou 11, **caractérisé en ce que** les signalétiques d'arrêt (250, 251) sont le mot STOP.

13. Dispositif selon les revendications 10 ou 11, **caractérisé en ce que** les signalétiques d'arrêt (250, 251) sont écrites en inverse vidéo.

## Claims

1. An optoelectronic taxi-assistance device for aircraft in an airport, said device comprising at least one collimator (1) and one calculator (2) dedicated to said collimator, said calculator (2) comprising means for displaying safety symbols on the collimator (1), which safety symbols relate to either the position of the aircraft on the taxiways of the airport or to the manoeuvre to be performed by the aircraft on said taxiways, **characterised in that**, in the event of the aircraft turning, the safety symbols comprise an arrow (17) that is of variable size.

2. The device according to claim 1, **characterised in that** the length of the arrow (17) is maximum when entering the turn and zero when exiting the turn.

3. The device according to claim 1, **characterised in that** the safety symbols further comprise, on both sides of the arrow, a first indication (18) that relates to the taxiway on which the aircraft is before the turn and a second indication (19) that relates to the taxiway located at the exit of the turn.

4. The device according to claim 1, **characterised in that** the safety symbols include a first symbol (20) that represents the width of the taxiway and a second symbol (22) that represents the width of the main landing gear, the widths of the first symbol (20) and of the second symbol (22) being shown to the same scale, the position of the second symbol (22) relative to the first symbol (20) being representative of the actual position of the landing gear on the taxiway.

5. The device according to claim 4, **characterised in that** the first symbol (20) is a rectangle that includes a central bar (21) that symbolises the axis of the taxiway and the second symbol (22) is composed of two oblong shapes.

6. The device according to claim 4, **characterised in that** the safety symbols further comprise, on both sides of the first symbol (20), two alarm symbols (23) that start flashing when the landing gear is very close to the edge of the taxiway.

7. The device according to claim 4, **characterised in that** the second safety symbol (22) starts flashing when the landing gear is very close to the edge of the taxiway.

8. The device according to claim 1, **characterised in that** the safety symbols comprise a stop barrier (24), said stop barrier (24) occupying a precise and constant virtual position on a taxiway of the airport.

9. The device according to claim 8, **characterised in that** the stop barrier (24) comprises at least one base (241) on which a grid (243) is mounted that is composed of inclined and parallel bars between two horizontal bars (242).

10. The device according to claim 8, **characterised in that** the safety symbols further comprise at least one first stop signal (250) and an indication of the distance (251) between the aircraft and the virtual position of the stop barrier (24).

11. The device according to claim 8, **characterised in that** the safety symbols further comprise at least one first and one second stop signal (250, 251) that flash when the distance between the aircraft and the virtual position of the stop barrier (24) is less than a set value.

12. The device according to claim 10 or 11, **characterised in that** the stop signals (250, 251) are the word STOP.

13. The device according to claim 10 or 11, **characterised in that** the stop signals (250, 251) are written in reverse video.

## Patentansprüche

1. Optoelektronische Taxi-Hilfseinrichtung für Luftfahrzeuge auf einem Flughafen, wobei die Einrichtung wenigstens einen Kollimator (1) und einen für den Kollimator dedizierten Rechner (2) umfasst, wobei der Rechner (2) Mittel zum Anzeigen von Sicherheitssymbolen auf dem Kollimator (1) umfasst, wobei sich die Sicherheitssymbole entweder auf die Position des Luftfahrzeugs auf den Rollbahnen des Flughafens oder auf das von dem Luftfahrzeug auf den Rollbahnen durchzuführende Manöver beziehen, **dadurch gekennzeichnet, dass** die Sicherheitssymbole für den Fall einer Wendung des Luftfahrzeugs einen Pfeil (17) mit einer variablen Größe umfassen.

2. Einrichtung nach Anspruch 1, **dadurch gekennzeichnet, dass** die Länge des Pfeils (17) beim Eintreten in die Wendung maximal und beim Austreten aus der Wendung null ist.

3. Einrichtung nach Anspruch 1, **dadurch gekennzeichnet, dass** die Sicherheitssymbole auch, auf beiden Seiten des Pfeils, eine erste Anzeige (18), die sich auf die Rollbahn bezieht, auf der sich das Luftfahrzeug vor der Wendung befindet, und eine zweite Anzeige (19) umfasst, die sich auf die Rollbahn bezieht, die sich am Ausgang der Wendung befindet.

4. Einrichtung nach Anspruch 1, **dadurch gekennzeichnet, dass** die Sicherheitssymbole ein erstes, die Breite der Rollbahn repräsentierendes Symbol (20) und ein zweites, die Breite des Hauptfahrwerk repräsentierendes Symbol (22) aufweist, wobei die Breiten des ersten Symbol (20) und des zweiten Symbols (22) im selben Maßstab dargestellt werden, wobei die Position des zweiten Symbols (22) relativ zum ersten Symbol (20) für die tatsächliche Position des Fahrwerks auf der Rollbahn repräsentativ ist.

5. Einrichtung nach Anspruch 4, **dadurch gekennzeichnet, dass** das erste Symbol (20) ein Rechteck ist, das einen mittleren Balken (21) aufweist, der die Achse der Rollbahn symbolisiert, und das zweite Symbol (22) aus zwei länglichen Formen besteht.

6. Einrichtung nach Anspruch 4, **dadurch gekennzeichnet, dass** die Sicherheitssymbole auch, auf beiden Seiten des ersten Symbols (20), zwei Alarmsymbole (23) umfassen, die zu blinken beginnen, wenn sich das Fahrwerk sehr nahe am Rand der Rollbahn befindet.

7. Einrichtung nach Anspruch 4, **dadurch gekennzeichnet, dass** das zweite Sicherheitssymbol (22) zu blinken beginnt, wenn sich das Fahrwerk sehr nahe am Rand der Rollbahn befindet.

8. Einrichtung nach Anspruch 1, **dadurch gekennzeichnet, dass** die Sicherheitssymbole eine Stoppbarriere (24) umfassen, wobei die Stoppbarriere (24) eine genaue und konstante virtuelle Position auf einer Rollbahn des Flughafens einnimmt.

9. Einrichtung nach Anspruch 8, **dadurch gekennzeichnet, dass** die Stoppbarriere (24) wenigstens einen Fuß (241) aufweist, auf dem ein Gitter (243) montiert ist, das aus geneigten und parallelen Balken zwischen zwei horizontalen Balken (242) besteht.

10. Einrichtung nach Anspruch 8, **dadurch gekennzeichnet, dass** die Sicherheitssymbole auch wenigstens ein erstes Stoppsignal (250) und eine Anzeige des Abstands (251) zwischen dem Luftfahrzeug und der virtuellen Position der Stoppbarriere (24) umfassen.

11. Einrichtung nach Anspruch 8, **dadurch gekennzeichnet, dass** die Sicherheitssymbole auch wenigstens ein erstes und ein zweites Stoppsignal (250, 251) umfassen, die blinken, wenn der Abstand zwischen dem Luftfahrzeug und der virtuellen Position der Stoppbarriere (24) kleiner als ein Sollwert ist.

12. Einrichtung nach Anspruch 10 oder 11, **dadurch gekennzeichnet, dass** die Stoppsignale (250, 251) das Wort STOP sind.

13. Einrichtung nach Anspruch 10 oder 11, **dadurch gekennzeichnet, dass** die Stoppsignale (250, 251) in invertierter Darstellung geschrieben sind.
